# EUROPEAN PATENT SPECIFICATION

(11) **EP 3 124 196 B1**
(45) Date of publication and mention of the grant of the patent: **18.12.2019**
(21) Application number: 15425056.7
(22) Date of filing: 28.07.2015
(51) Int. Cl.: B29C 43/28, B29C 43/34, B29C 43/24, B29D 30/38, B65H 19/00, B65H 19/18

(54) **STEEL CORD APPLICATION DEVICE, APPARATUS AND METHOD FOR STEEL CORD RUBBER COATING**
STAHLSEILAUFBRINGUNGSVORRICHTUNG, VORRICHTUNG UND VERFAHREN ZUR STAHLSEILGUMMIBESCHICHTUNG
DISPOSITIF D'APPLICATION DE CÂBLES D'ACIER, APPAREIL ET PROCÉDÉ DE REVÊTEMENT DE CAOUTCHOUC DE CORDE EN ACIER

(43) Date of publication of application: 01.02.2017
(73) Proprietor: Comerc International S.R.L., 21053 Castellanza (VA) (IT)
(72) Inventor: Lualdi, Renato, 21052 Busto Arsizio VA (IT)
(74) Representative: Pizzoli, Antonio

(56) References cited:
- EP-A2- 0 335 718
- DE-U1- 9 107 510
- SU-A1- 1 183 392
- US-A- 2 512 762
- US-A- 3 888 713
- US-A1- 2009 249 598
- US-A1- 2009 266 476

## Description

The present invention generally relates to the manufacturing of semifinished multilayer products comprising pairs of rubber bands between which a plurality of metal cords are arranged, said products being primarily intended to the tire industry, and in particular to a cord application device, as well as to an apparatus and a method for the manufacturing of rubber-coated metal cords.

In the manufacturing of multilayer products made of rubber or other elastomeric materials reinforced with high strength metal cords, the so-called "cord" or "Steel Cord", as is typically the case for the manufacturing of vehicle tires, hot lamination processes are usually employed wherein rubber bands are coupled with metal cords by way of special calenders provided with pairs of counter-rotating cylinders with parallel axes. The calenders are equipped with heating elements, temperature sensors, as well as with a system for adjusting the surface temperature of the cylinders. Rubber bands and metal cords are continuously fed to a lamination gap defined between one or more pairs of calender rolls, whose height can be adjusted by acting on a movable cylinder of the pair.

In known installations or apparatuses metal cords are fed from spools mounted on respective unwinding devices in turn mounted on a creel aligned with a calender.

The metal cords unwound and fed from the respective spools pass through an alignment framework comprising a plurality of apertures or, alternatively, a set of guide rollers arranged perpendicular to one another so as to define a plurality of through openings. This allows to group and align the cords on a horizontal plane.

The metal cords are then fed towards a cord application device arranged close to a calender and configured to allow coupling in a sandwich manner between the rubber bands produced by the calender and the cords fed from the creel.

To this aim, the cord application device comprises a grooved cord pressing cylinder in whose grooves single cords coming from the creel are received, i.e. fitted. This allows to couple in a sandwich manner the elastomeric bands with the metal cords, while maintaining a predetermined pitch between the cords. Alignment and pitch control of the cords are in fact fundamental so as to ensure that the semifinished products have a good quality and are free from defects.

Known cord application devices further comprise a grooved cord guiding cylinder arranged upstream of the pressing cylinder in the feeding direction of the metal cords. The use of a cord guiding cylinder facilitates application of the cords coming from the creel.

When the spools of metal cords run out of material new cords must be prepared so as to prosecute manufacturing and to obtain a continuous semifinished product.

To this aim, the empty spools of a previous production must be unloaded from the unwinding devices of a creel and replaced with full spools. Subsequently, every single cord must be fitted into a respective opening of an alignment framework or a set of guide rollers.

These operations require a long time, for example three to six hours, and the presence of several operators. For this reason almost all apparatuses currently comprise two creels provided with respective unwinding devices, one of which is prepared while the other is in production.

An example of a two-creel apparatus is described by US 2009/0266476 A1.

In addition to setting up the creels, when the cord spools are empty further operations are required at the calender side. In order to ensure continuity of a semifinished product, manufacturing must be interrupted before the tail end of a first metal cord reaches the calender. To this aim, known apparatuses comprise a cord joining press at the entrance of which the metal cords are stopped close to their respective tail ends. The cords are cut upstream of the press with respect to the feeding direction and laid on its lower plane.

The metal cords of a new production, previously prepared in the second creel, must be connected to the metal cords of the previous production. According to a frequently used method, the joining press is employed to make a junction of the two sets of metal cords by way of a rubber strip placed therebetween. Upon curing the strip acts as "glue" among the cords.

Alternatively, it is possible to tie the tail ends of the cords of a previous production with the head ends of the cords of a new production.

The junction so obtained between the two sets of cords is made to advance beyond the calender and the metal cords of the new production are then manually fitted one by one in the grooves of the cord guiding cylinder and then into the grooves of the pressing cylinder of the cord application device associated with the calender.

Considering the high number of metal cords and that due to the small room available this operation can be performed by two operators at the most, this takes a long time, for example about one hour.

Known cord application devices provided with both a pressing cylinder and a cord guiding cylinder are rotatable about an axis between an operating position, wherein by means of a pressing system the pressing cylinder applies the metal cords on a calender roll on which a first rubber layer is fed, and a rest position, wherein, when the apparatus is stopped, the pressing cylinder is rotated away from the calender cylinder thus allowing operators to access the cord guiding cylinder. Thanks to this configuration, fitting of the cords into the grooves of the cord guiding cylinder and subsequently into those of the pressing cylinder, as well as the possible replacing of the two cylinders with cylinders having grooves of a different shape and/or step, may be performed under safe conditions with cords not under pull.

An apparatus comprising a cord application device of this type is described by US 2009/0249598 A1. US 2512762 discloses a device according to the preamble of claim 6.

However, in rotatable cord application devices the cords are not blocked in the grooves of the cylinders and there is a risk that they are moved with respect to a nominal position and come out from their grooves either during the preparation of a new production or during the rotation of the cord application device into the operating position, which may lead to a further extension of the preparation time of a new production.

There are also known cord application devices that may be moved linearly from and to the calender so as to allow to draw-in the cords when the apparatus is stopped. However, these devices only have a pressing cylinder, whereby rotatable cord application devices of the type described above are generally preferred.

There is therefore the need to improve apparatuses and methods for the rubber coating of metal cords, which is an object of the present invention.

More particularly, it is an object of the invention to provide an apparatus and a method for the rubber coating of metal cords allowing to reduce the preparation and start time of a new production, which is only partially solved by employing apparatuses having two creels.

It is also an object of the present invention to provide a cord application device for said rubber coating apparatus which can effectively prevent movements of the cords during the preparation of a new production.

An idea of solution underlying the invention is to provide a two-creels rubber coating apparatus for metal cords comprising, for each creel, a preparation assembly in turn comprising a cord alignment framework or equivalent set of rollers, a cord application device and a cord joining press, these elements being arranged in series along a feeding direction. The preparation assemblies are mounted on a common platform, movable relative to the calender perpendicularly to the feeding direction. The preparation assemblies are therefore selectively displaceable between an in-line position for the manufacturing and an off-line position suitable for setting up a new production.

The cord application device of each preparation assembly includes a cord guiding cylinder and a cord pressing cylinder arranged in series in a feeding direction of the cords from the creels to the calender, and is slidably movable in a straight direction along suitable guide rails between a working position and a preparation position.

Similarly to known apparatuses, the cord application device is close to the calender in the working position, so that its cord guiding cylinder applies the metal cords on a calender roll on which a first layer of rubber is fed. In the preparation position the cord application device is located within the respective preparation assembly upstream of the joining press, thus allowing to lay down the cords of a new production and then to join them with the cords of a previous production, as well as to draw them already under tension up to the calender for the coating with rubber.

The straight movement of the cord application device between the two positions prevents the cords from coming out from the grooves of the guiding cylinder and the pressing cylinder, because the cords are in a position corresponding to the working or nominal position since the preparation step of a new production.

In other words, the invention advantageously allows to minimize the risk that metal cords come out from the cylinder grooves thanks to the straight movement of the cord application device.

Moreover, the higher installation costs notwithstanding, this configuration of the rubber coating apparatus and the related cord application device offers the advantage of a remarkable reduction of downtimes for the preparation of new productions when the metal cord spools run out of material. In fact, during the preparation step of a creel it is possible to perform not only replacement operations of the spools, but also fitting operations of the cords in the cord application device. In known apparatuses these operations can only be made once a creel not yet working is aligned or connected to the calender.

The joining presses associated with each creel are advantageously equipped with magnetic plates arranged downstream of the respective pressing planes with respect to the feeding direction of the metal cords. The magnetic plates allow to stably retain the cords during the operations of cutting and splicing, as well as when drawing-in the cords into the cylinders of the cord application device.

Another advantage offered by the invention is that provision of preparation assemblies allows to perform all the preparation operations of a new production in a creel off-line, thereby making it possible to reduce the distance between the creels and the calender, which also reduces metal cords scraps.

Further advantages and features of the present invention will become clear to those skilled in the art from the following detailed and non-limiting description of embodiments thereof with reference to the accompanying drawings in which:
- Figures 1 and 2 respectively schematically show a top plan view and a side view of an apparatus for the rubber-coating of metal cords according to the invention;
- Figures 3 and 4 respectively schematically show a top plan view and a side view of an apparatus for the rubber-coating of metal cords according to an alternative embodiment of the invention;
- Figures 5 to 11 are side views schematically showing subsequent operation steps of the apparatus according to the invention.

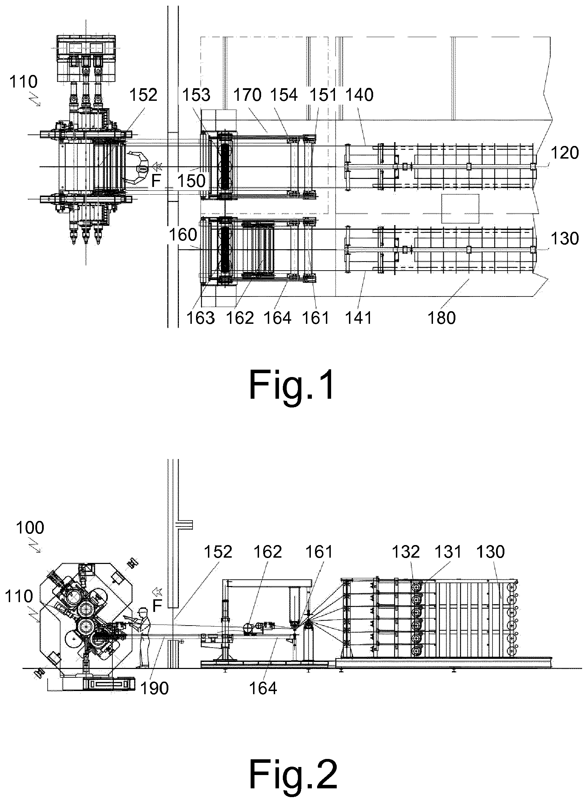

Referring to Figures 1 and 2, an apparatus for the rubber coating of metal cords according to the invention is generally indicated at 100.

The rubber coating apparatus 100 comprises in known manner a calender 110 configured for the production of two rubber bands intended to coat a plurality of metal cords for the manufacturing of a semifinished multilayer.

The rubber coating apparatus 100 also comprises in known manner a first creel and a second creel, 120, 130, both provided with a plurality of unwinding devices 121, 131 on which spools 122, 132 for feeding high strength metal cords to be rubber-coated are respectively mounted. The cords are generally indicated by reference number 140 if fed from the first creel 120, and by reference number 141 if fed from the second creel 130. The feeding direction of the cords 140, 141 from the creels 120, 130 to the calender 110 is schematically indicated in the figures by an arrow F.

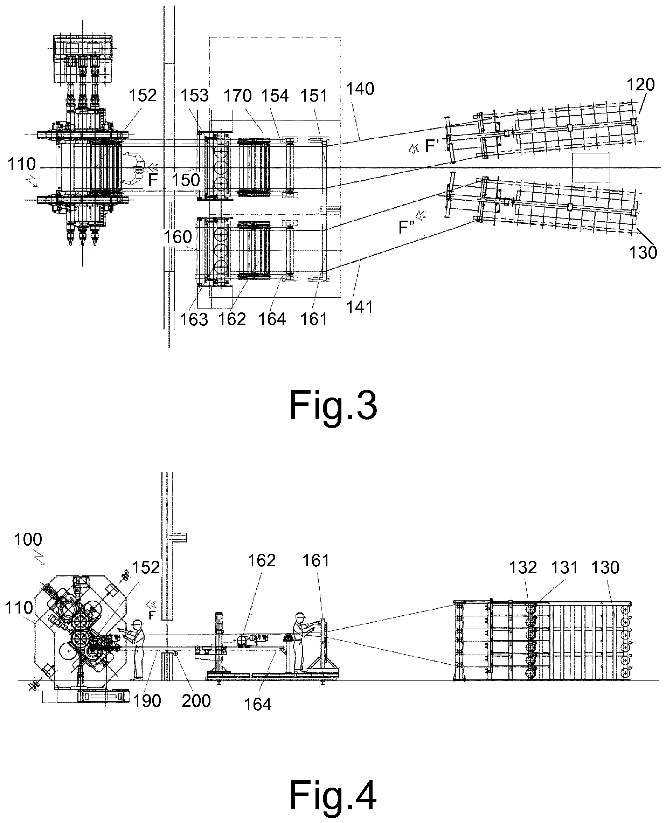

The rubber coating apparatus 100 also comprises a first preparation assembly and a second preparation assembly 150, 160, respectively associated to the first and second creel 120, 130, both comprising a set of alignment rollers 151, 161 (shown in Figure 2) intended to receive the metal cords, or, in an entirely equivalent manner, an alignment framework (shown in Figure 4), a cord application device 152, 162 for the application of the metal cords and a cord joining press 153, 163 for joining the cords of a new production with those of a previous production.

The cord application device 152, 162 of each preparation assembly 150, 160 comprises a sliding member 152a, 162a, a cord guiding cylinder 152b, 162b and a cord pressing cylinder 152c, 162c. The cord guiding cylinder 152b, 162b and pressing cylinder 152c, 162c are provided with a plurality of circumferential grooves parallel to each other, configured to receive respective from the creels 120, 130 metal cords 140, 141 to be rubber-coated along the feeding direction F, and are rotatably mounted on the sliding members 152a, 162a one after the other in the feed direction F.

Each cord application device 152, 162 may also advantageously comprise a blocking member 152d, 162d, for example of a mechanical type, movable to and from the pressing cylinder 152c, 162c, which allows to stably block thereon the metal cords 140, 141 fed from creels 120, 130.

The sliding member 152a, 162a of each cord application device 152, 162 is slidably supported, e.g. by way of wheels or bearings, on a pair of linear guides 154, 164 which allow its rectilinear movement, as it will be described in greater detail below.

The configuration of each preparation assembly 150, 160 is such that the alignment rollers 151, 161, the cord application device 152, 162, with the respective cord guiding cylinder 152b, 162b, and pressing cylinder 152c, 162c, and the cord joining press 153, 163 are arranged one after the other in the feeding direction F.

The two preparation assemblies 150, 160 are mounted on a platform 170 movable relative to the calender 110 in a transverse direction T perpendicular to the feeding direction F.

In the embodiment shown in Figures 1 and 2, the creels 120, 130 are arranged along the feeding direction F and are mounted on a platform 180, which is movable transversely to the calender 110 like the platform 170 on which the preparation assemblies 150, 160 are mounted.

When the creels 120 and 130 are installed on a platform 180 as shown in Figures 1 and 2, the platforms 170 and 180 may advantageously be made integral or coupled with each other.

As it will be described in greater detail below, this configuration allows to perfectly align each creel 120, 130 and the respective preparation assembly 150, 160 with the calender 110 in the feeding direction F.

Figures 3 and 4 show an alternative embodiment of the apparatus 100, that is the same as the previous one but features fixed creels 120, 130 with respect to the calender 110. The creels are arranged such that the respective feeding directions of the metal cords, schematically indicated by arrows F' and F ", are convergent towards the movable platform 170 that supports the two preparation assemblies 150, 160. This configuration is generally cheaper than the previous one as far as installation costs are concerned. The arrangement of the creels inclined and convergent with respect to the feeding direction F allows to minimize any problem of pull variation of the metal cords due to the different angles that the respective feeding directions F', F" form with the feeding direction F, that represents the center line of the calendering line.

The provision of two preparation assemblies that are respectively associated with the two creels allows to carry out on a creel all the operations needed for the preparation of a new manufacturing or rubber coating cycle, while the other creel is employed in the rubber coating cycle of the metal cords.

Figures 1, 2 and 3, 4 show the case in which the first creel 120 and the first preparation assembly 150 are in line with the calender 110 for carrying out a manufacturing cycle, whereas the second creel 130 and the second preparation assembly 160 are off line for the preparation of a new manufacturing cycle.

The preparation assemblies 150, 160 are in particular configured for the fitting of the metal cords into the respective cord application devices and for the junction of their head ends with the tail ends of the metal cords of a previous manufacturing or rubber-coating cycle.

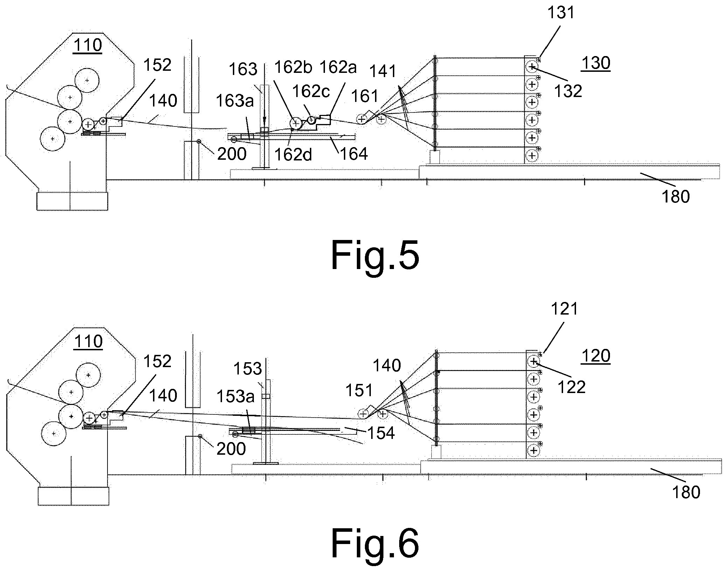

Now referring now to figures 5 to 11, subsequent operation steps of the rubber coating apparatus 100 will be described. In the following, there will be considered the case shown in the figures wherein the first creel 120 is in line employed in a manufacturing cycle and the second creel 130 is off line and is prepared for a new manufacturing cycle with the aid of the second preparation assembly.

Reference will also be made to the embodiment of the apparatus 100 shown in Figures 1 and 2, wherein the preparation assemblies 150, 160 and the creels 120, 130 are movable transversely to the calender 110 on the respective platforms 170, 180.

With reference to Figure 5, in the off-line preparation assembly, i.e. the second preparation assembly 160, each cord 141 fed from the respective creel, i.e. the second creel 130, is made to pass through the alignment rollers 161, above the cord guiding cylinder 162b and under the pressing cylinder 162c of the cord application device 162. Each cord 141 runs in a single groove of the cylinders 162b, 162c of the cord application device 162 and there are no empty grooves. The metal cords 141 so arranged in plan configuration and made mutually parallel are advantageously stably blocked in position on the pressing cylinder 162c by the blocking member 162d movable to and from it. The head ends of the metal cords 141 coming from the creel 130 are brought into the joining press 163 and a strip of rubber is applied by pressing onto the metal cords 141. The metal cords 141 are then held in place by a magnetic plate 163a the joining press of 163 may be advantageously provided with. The magnetic plate 163a is in particular arranged beyond the plane of the joining press 163 in the feeding direction F, whereby the head ends of the metal cords 141 partially protrude beyond their junction in the feeding direction F.

The cords 141 fed from the second creel 130 are thus ready for a new production cycle and prepared to be joined with the metal cords 140 fed from the first creel 120 at the end of the manufacturing cycle in progress.

Now referring to figures 6 to 8, when the creel in line, i.e. creel 120, runs out of metal cords 140, their tail ends that have left the respective unwinding device 121 on the creel 120 are retained in position on the press 153 of the first preparation assembly 150, which, similarly to the joining press 163, may be advantageously provided with a magnetic plate 153a arranged beyond its pressing plane in the feeding direction F.

As shown in figure 6, the manufacturing cycle is stopped by blocking the calender 110 upon arrival of the tail end of the first metal cord 140 at the entrance of the press 153.

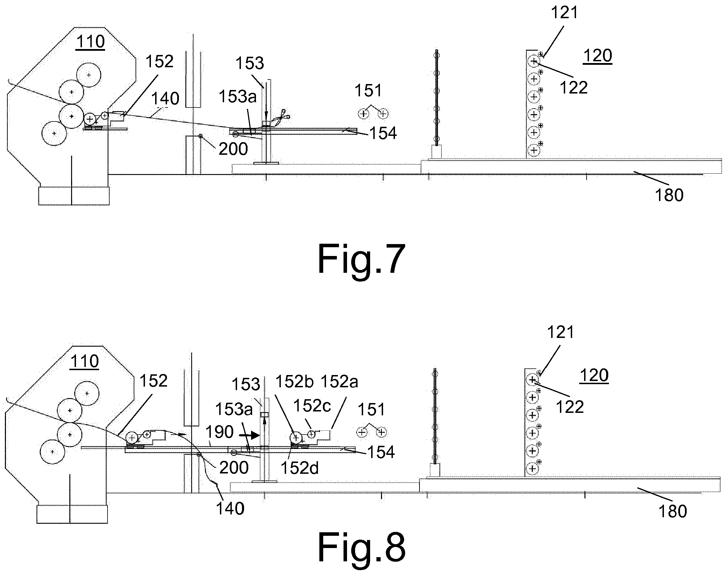

A rubber strip is applied on the metal cords 140 so blocked in position, thus joining them, and, as shown in figure 7, the portion of the cords that remains upstream of the press 153 with respect to the feed direction F is cut.

As shown in figure 8, a pair of connecting guides 190 is mounted between the calender 110 and the preparation assembly 150, these guides being connected to the supporting guides 154 of the preparation assembly 150 in line and defining therewith a straight path for the cord application device 152 in the feeding direction F. The cord application device 152 is released from the calender 110 and, sliding on the connecting guides 190 and supporting guides 154, respectively, is linearly moved from the calender to an intermediate position between the press 153 and the alignment rollers 151 of the preparation assembly 150, as schematically indicated by the arrows in figure 8, oriented from the calender 110 towards the first preparation assembly 150. At the passage of the cord application device 152, the metal cords 140 previously joined and cut are separated therefrom and placed on a supporting cylinder 200 arranged close to the calender 110.

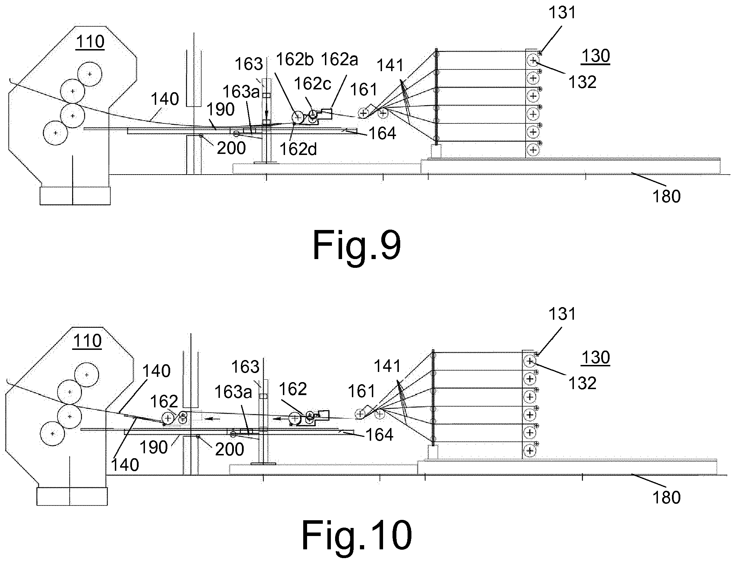

The mobile platform 170 that supports the first and the second preparation assemblies 150, 160 is then moved in the transverse direction T so as to place the off-line preparation assembly, i.e. the second preparation assembly 160, in the feeding direction F, hence now in line with the calender 110. As shown in figure 9, the connecting guides 190 are thus aligned with the supporting guides 164 of the cord application device 162 of the preparation assembly 160, that was previously off line.

The first preparation assembly 150 is thus situated in an off-line position, i.e. in a non-operating position, and may be prepared as described above with reference to the second preparation assembly 160 for a new manufacturing cycle.

As explained above, the head ends of the metal cords 141, fed by the second creel 130, are blocked beyond the plane of the second press 163 by the magnetic plate 163a in the feeding direction F. As shown in figure 9, these head ends are spliced by the second press 163 with the tail ends of the cords 140 of the previous manufacturing cycle, taken from the supporting cylinder 200, by way of a rubber strip arranged therebetween, thus creating continuity between the cords 140 of the previous production and the cords 141 of the new production and allowing to make the apparatus 100 ready for a new manufacturing cycle.

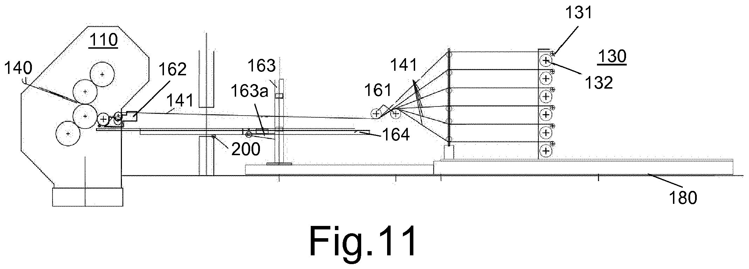

Finally, referring to figures 10 and 11, by operating the motors of the calender 110, preferably at a low speed, the cord application device 162 is progressively pulled with the joined cords 140 and 141 in the feeding direction F up to the calender 110, and connected thereto so as to start a new manufacturing cycle.

The invention has been described with reference to preferred embodiments thereof. It will be understood that there may be further embodiments relating to the same inventive idea as defined in the scope of protection of the claims set forth below.

## Claims

1. An apparatus (100) for the rubber-coating of metal cords, said apparatus (100) comprising:
i) a calender (110) configured to make two rubber bands intended to receive between them a plurality of metal cords for the manufacturing of a multilayer semifinished product,
ii) a first and a second creel (120, 130) both of which comprise a plurality of unwinding devices (121, 131) on which spools (122, 132) for the feeding of high strength metal cords (140, 141) towards said calender (110) are respectively mounted,
**characterized in that** it also comprises a first and a second preparation assemblies (150, 160) arranged between the calender (110) and the creels (120, 130) in a feeding direction (F) and respectively configured to receive metal cords (140, 141) from the first and second creel (120, 130), said preparation assemblies (150, 160) being mounted on a platform (170) movable relative to the calender (110) in a transverse direction (T) perpendicular to the feeding direction (F) and comprising a set of alignment rollers (151, 161), or an equivalent cord-alignment framework, intended to receive said metal cords (140, 141), a cord application device (152, 162) configured to apply the metal cords (140, 141) between the rubber bands produced by the calender (110), and a joining press (153, 163), wherein said alignment rollers, cord application device and cord joining press are arranged in series along the feeding direction (F),
and **in that** the cord application device (152, 162) of each preparation assembly (150, 160) is movable along linear guides (154, 164, 190) between a working position close to the calender (110) and a preparation position located between the alignment rollers (151, 161) and the joining press (153, 163) of the respective preparation assembly (150, 160).

2. An apparatus (100) according to claim 1, wherein the creels (120, 130) are arranged along the feeding direction (F) and are mounted on a platform (180) that is movable transverse to the calender (110) like the platform (170) on which the preparation assemblies (150, 160) are mounted.

3. An apparatus (100) according to claim 1, wherein the creels (120, 130) are fixed relative to the calender (110) and arranged so that the respective feeding directions (F', F") of the metal cords (140, 141) are convergent with respect to said feeding direction (F).

4. An apparatus (100) according to any one of claims 1 to 3, wherein the planes of the cord joining presses (153, 163) of the preparation assemblies (150, 160) comprise electromagnetic plates (153a, 163a), said electromagnetic plates (153a, 163a) being arranged downstream of the cord joining presses (153, 163) with respect to the feeding direction (F).

5. An apparatus (100) according to any one of claims 1 to 4, wherein the linear guides along which each cord application device is movable (152, 162) comprise a pair of supporting guides (154, 164) arranged between the alignment rollers (151, 161) and the cord joining press (153, 163) and a pair of connecting guides (190) selectively mountable between the cord joining press (153, 163) and the calender (110).

6. A cord application device (152, 162) for use in an apparatus (100) for the rubber coating of metal cords according to any one of claims 1 to 5, said cord application device (152, 162) comprising:
i) a sliding member (152a, 162a)
ii) a cord guiding cylinder (152b, 162b)
iii) a cord pressing cylinder (152c, 162c)
said cord guiding cylinder (152b, 162b) and cord pressing cylinder (152c, 162c) being provided with a plurality of circumferential grooves parallel to each other, configured to receive respective metal cords (140, 141) intended to be coated with rubber along a feeding direction (F), and being rotatably mounted one after the other on said sliding member (152a, 162a) in said feed direction (F),
**characterized in that** said cord application device (152, 162) further comprises a blocking member (152d, 162d) suitable to stably block the metal cords (140, 141) on the pressing cylinder (152c, 162c), said blocking member being mounted on the sliding member (152a, 162a) and being movable to and from the pressing cylinder (152c, 162c).

7. A method for the manufacturing of multilayer comprising two outer rubber layers and an intermediate layer of metal cords in a rubber coating apparatus (100) having two creels (120, 130), said method comprising the steps of:
i) providing a first and a second preparation assemblies (150, 160) between a calender (110) and the two creels (120, 130) of said rubber coating apparatus (100), said first and second preparation assemblies (150, 160) comprising, a set of alignment rollers (151, 161), or an equivalent cord alignment framework, intended to receive metal cords (140, 141) from any one of the creels (120, 130), a cord application device (152, 162) for the application of the metal cords (140, 141) between the rubber band produced by the calender (110), and a cord joining press (153, 163), said set of alignment rollers, cord application device and cord joining press being arranged in series along a feeding direction (F) running from the creels (120, 130) to the calender (110);
ii) mounting said preparation assemblies (150, 160) on a platform (170) movable in a transverse direction (T) perpendicular to said feeding direction (F);
iii) drawing each metal cord (141) fed from the respective creel (130) in a cord guiding cylinder (162b) and in a cord pressing cylinder (162c) of the related cord application device (162), blocking and joining the metal cords (141) coming from the creel (130) in the related cord joining press (163) close to the respective head ends, wherein said operations are carried out in an off-line preparation (160) of the apparatus (100);
iv) stopping the calender (110), blocking and splicing the tail ends of the metal cords (140) in the cord joining press (153) of the respective preparation assembly (150), said operations being carried out when there are no more metal cords (140) in the creel (120) arranged in line;
v) moving the cord application device (152) of the in-line preparation assembly (150) linearly along the feed direction (F) from the working position close to the calender (110) to a preparation position between its cord joining press (153) and its alignment rollers (151);
vi) moving the mobile platform (170) that supports the first and the second preparation assemblies (150, 160) transversely relative to the feeding direction so as to align the off-line preparation assembly (160) in the feeding direction (F);
vii) joining the head ends of the metal cords (141) supplied by the creel (130) associated with the preparation assembly now in line (160) with the tail ends of the metal cords (140) that remain from the creel (120) associated to preparation assembly previously in line (150) by way of the cord joining press (163) of the preparation assembly (160) now in line;
viii) operating the motors of the calender (110) and towing the cord application device (162) of the preparation assembly now in line together with the spliced metal cords (140, 141), by making it move linearly along the feeding direction (F) up to the calender (110);
ix) connecting the cord application device (162) of the preparation assembly (160) now in line to the calender (110) and starting a new manufacturing cycle.

8. A method according to claim 7, wherein the junctions between the head and tail ends of the metal cords (140, 141) are carried out by applying and pressing rubber strips thereon.

9. A method according to claim 7 or 8, wherein the step v) of moving the cord application device (152) of the in-line preparation assembly (150) is carried out by mounting linear connecting guides (190) between the cord joining press (153) and the calender (110).

## Patentansprüche

1. Eine Vorrichtung (100) zur Beschichtung von Metallkord mit Gummi, wobei die besagte Vorrichtung (100) umfasst:
i) einen Kalander (110), dazu ausgelegt, zwei Gummibänder zu bilden, die zur Herstellung eines mehrlagigen Halbfabrikats zwischen sich eine Mehrzahl von Metallsträngen aufnehmen sollen,
ii) ein erstes und ein zweites Gatter (120, 130), welche beide eine Mehrzahl von Abspuleinrichtungen (121, 131) umfassen, auf denen Spulen (122, 132) für die Zuführung von hochfesten Metallsträngen (140, 141) zu dem besagten Kalander (110) gelagert sind,
**dadurch gekennzeichnet, dass** sie auch eine erste und eine zweite Vorbereitungsbaugruppe (150, 160) umfasst, die zwischen dem Kalander (110) und den Gattern (120, 130) in einer Zuführrichtung (F) angeordnet sind und jeweils dazu ausgelegt sind, Metallstränge (140, 141) von dem ersten und zweiten Gatter (120, 130) zu empfangen, wobei die besagten Vorbereitungsbaugruppen (150, 160) auf einer Plattform (170) montiert sind, die gegenüber dem Kalander (110) in einer Querrichtung (T) rechtwinklig zu der Zuführrichtung (F) beweglich ist und einen Satz von Justierwalzen (151, 152) umfasst oder ein äquivalentes Gerüst zum Justieren der Stränge, um die besagten Metallstränge zu empfangen, eine Kordapplikationseinrichtung (152, 162), geeignet, um die Metallstränge (140, 141) zwischen die von dem Kalander (110) hergestellten Gummibänder einzulegen, sowie eine Verbindungspresse (153, 163), wobei die besagten Justierwalzen, die Kordapplikationseinrichtung (152, 162) und die Kordverbindungspresse in einer Reihe entlang der Zuführrichtung (F) angeordnet sind,
sowie dadurch, dass die Kordapplikationseinrichtung (152, 162) jeder Vorbereitungsbaugruppe (150, 160) entlang von Linearführungen (154, 164, 190) beweglich ist zwischen einer Arbeitsposition nahe dem Kalander (110) und einer Vorbereitungsposition zwischen den Justierwalzen (151, 161) und der Verbindungspresse (153, 163) der jeweiligen Vorbereitungsbaugruppe (150, 160).

2. Eine Vorrichtung (100) gemäß Anspruch 1, wobei die Gatter (120, 130) entlang der Zuführrichtung (F) angeordnet und an einer Plattform (180) montiert sind, welche quer zu dem Kalander (110) bewegbar ist wie die Plattform (170), an welcher die Vorbereitungsbaugruppen (150, 160) montiert sind.

3. Eine Vorrichtung (100) gemäß Anspruch 1, wobei die Gatter (120, 130) relativ zu dem Kalander (110) festgelegt sowie derart angeordnet sind, dass die jeweiligen Zuführrichtungen (F', F") der Metallstränge (140, 141) zu der Zuführrichtung (F) hin konvergieren.

4. Eine Vorrichtung (100) gemäß einem der Ansprüche 1 bis 3, wobei die Ebenen der Kordverbindungspressen (153, 163) der Vorbereitungsbaugruppen (150, 160) elektromagnetische Platten (153a, 163a) umfassen, wobei die besagten elektromagnetischen Platten (153a, 163a) hinsichtlich der Zuführrichtung (F) stromabwärts der Kordverbindungspressen (153, 163) angeordnet sind.

5. Eine Vorrichtung (100) gemäß einem der Ansprüche 1 bis 4, wobei die Linearführungen, entlang der jede Kordapplikationseinrichtung (152, 162) beweglich ist, ein Paar von stützenden Führungen (154, 164) umfassen, welche zwischen den Justierwalzen (151, 161) und der Kordverbindungspresse (153, 163) angeordnet sind, sowie ein Paar von verbindenden Führungen (190), welche selektiv zwischen der Kordverbindungspresse (153, 163) und dem Kalander (110) montierbar sind.

6. Eine Kordapplikationseinrichtung (152, 162) zur Verwendung in einer Vorrichtung (100) für die Beschichtung von Metallkord mit Gummi gemäß einem der Ansprüche 1 bis 5, wobei die besagte Kordapplikationseinrichtung (152, 162) umfasst:
i) ein Gleitelement (152a, 162a)
ii) einen Kordführungszylinder (152b, 162b)
iii) einen Kordpresszylinder (152c, 162c)
wobei die besagten Kordführungszylinder (152b, 162b) und Kordpresszylinder (152c, 162c) mit einer Mehrzahl von umlaufenden, zueinander parallelen Nuten versehen sind, welche dazu ausgelegt sind, zugeordnete Metallstränge (140, 141) aufzunehmen, die entlang einer Zuführrichtung (F) mit Gummi beschichtet werden sollen, und welche in der besagten Zuführrichtung (F) hintereinander an dem besagten Gleitelement (152a, 162a) drehbar gelagert sind,
**dadurch gekennzeichnet, dass** die Kordapplikationseinrichtung (152, 162) ferner ein Blockierungselement (152d, 162d) umfasst, das in der Lage ist, die Metallstränge (140, 141) an dem Presszylinder (152c, 162c) stabil zu blockieren, wobei das besagte Blockierungselement (152d, 162d) an dem Gleitelement (152a, 162a) montiert ist und zu dem Presszylinder (152c, 162c) hin und von jenem weg bewegbar ist.

7. Ein Verfahren zur Herstellung einer mehrlagigen Schicht, umfassend zwei äußere Gummilagen und eine Zwischenlage aus Metallkord, in einer Gummibeschichtungsvorrichtung (100) mit zwei Gattern (120, 130), wobei das besagte Verfahren die folgenden Schritte aufweist:
i) Vorsehen einer ersten und zweiten Vorbereitungsbaugruppe (150, 160) zwischen einem Kalander (110) und den zwei Gattern (120, 130) der besagten Gummibeschichtungsvorrichtung (100), wobei die besagte erste und zweite Vorbereitungsbaugruppe (150, 160) einen Satz von Justierwalzen (151, 161) umfasst oder ein äquivalentes Gerüst zum Justieren der Stränge, um die besagten Metallstränge von einem der Gatter (120, 130) zu empfangen, eine Kordapplikationseinrichtung (152, 162) zum Einlegen der Metallstränge (140, 141) zwischen die von dem Kalander (110) hergestellten Gummibänder, sowie eine Kordverbindungspresse (153, 163), wobei der besagte Satz von Justierwalzen, die Kordapplikationseinrichtung (152, 162) und die Kordverbindungspresse in einer Reihe angeordnet sind entlang der Zuführrichtung (F), die von den Gattern (120, 130) zu dem Kalander (110) verläuft;
ii) Montieren der besagten Vorbereitungsbaugruppen (150, 160) an einer Plattform (170), die in einer Querrichtung (T) rechtwinklig zu der Zuführrichtung (F) beweglich ist;
iii) Ziehen jedes von dem zugeordneten Gatter (130) zugeführten Metallstrangs (141) in einen Kordführungszylinder (162b) und in einen Kordpresszylinder (162c) der zugeordneten Kordapplikationseinrichtung (162), Blockieren und Verbinden der von demGatter (130) kommenden Metallstränge (141) in der zugeordneten Kordverbindungspresse (163) nahe der jeweiligen vorderen Enden, wobei die besagten Operationen in einer Off-line-Vorbereitung (160) der Vorrichtung (100) ausgeführt werden;
iv) Stoppen des Kalanders (110), Blockieren und Spleißen der hinteren Enden der Metallstränge (140) in der Kordverbindungspresse (153) der jeweiligen Vorbereitungsbaugruppe (150), wobei die besagten Operationen durchgeführt werden, wenn es in dem auf der Linie angeordneten Gatter (120) keine Metallstränge (140) mehr gibt;
v) Bewegen der besagten Kordapplikationseinrichtung (152) der in der Linie liegenden Vorbereitungsbaugruppe (150) linear entlang der Zuführrichtung (F) von der Arbeitsposition nahe dem Kalander (110) zu einer Vorbereitungsposition zwischen seiner Kordverbindungspresse (153) und seinen Justierwalzen (151);
vi) Bewegen der mobilen Plattform (170), welche die erste und zweite Vorbereitungsbaugruppe (150, 160) trägt, quer zu der Zuführrichtung, um die außerhalb der Linie liegende Vorbereitungsbaugruppe (150, 160) in der Zuführrichtung (F) auszurichten;
vii) Verbinden der Kopfenden derjenigen Metallstränge (141), die von dem Gatter (130) angeliefert werden, welches der nun in der Linie befindlichen Vorbereitungsbaugruppe (160) zugeordnet ist, mit den hinteren Enden derjenigen Metallstränge (140), die von dem Gatter (120) übrig sind, welches der zuvor in der Linie befindlichen Vorbereitungsbaugruppe (150) zugeordnet ist, mittels der Kordverbindungspresse (163) der nun in der Linie liegenden Vorbereitungsbaugruppe (160);
viii) Betreiben der Motoren des Kalanders (110) und Schleppen der Kordapplikationseinrichtung (162) der nun in der Linie liegenden Vorbereitungsbaugruppe zusammen mit den gespleißten Metallsträngen (140, 141), indem sie linear entlang der Zuführrichtung (F) hin zu dem Kalander (110) bewegt wird;
ix) Verbinden der Kordapplikationseinrichtung (162) der nun in einer Linie mit dem Kalander (110) liegenden Vorbereitungsbaugruppe (160) und Starten eines neuen Produktionszyklus.

8. Ein Verfahren gemäß Anspruch 7, wobei die Verbindungen zwischen den vorderen und hinteren Enden der Metallstränge (140, 141) durch Applikation und Aufpressen von Gummistreifen hergestellt werden.

9. Ein Verfahren gemäß Anspruch 7 oder 8, wobei der Schritt v) des Bewegens der Kordapplikationseinrichtung (152) der in der Linie liegenden Vorbereitungsbaugruppe (150) durch Montage linear verbindender Führungen (190) zwischen der Kordverbindungspresse (153) und dem Kalander (110) ausgeführt wird.

## Revendications

1. Appareil (100) pour recouvrir des câbles métalliques avec du caoutchouc, ledit appareil (100) comprenant :
i) une calandre (110) configurée pour réaliser deux bandes de caoutchouc prévues pour recevoir entre elles une pluralité de câbles métalliques pour la fabrication d'un produit semi-fini multicouche,
ii) un premier et un second porte-bobine (120, 130) dont les deux comprennent une pluralité de dispositifs de déroulement (121, 131) sur lesquels sont respectivement montées des bobines (122, 132) pour l'alimentation de câbles métalliques haute résistance (140, 141) vers ladite calandre (110),
**caractérisé en ce qu'**il comprend également un premier et un second ensemble de préparation (150, 160) agencés entre la calandre (110) et les porte-bobines (120, 130) dans une direction d'alimentation (F) et respectivement configurés pour recevoir les câbles métalliques (140, 141) des premier et second porte-bobines (120, 130), lesdits ensembles de préparation (150, 160) étant montés sur une plateforme (170) mobile par rapport à la calandre (110) dans une direction transversale (T) perpendiculaire à la direction d'alimentation (F) et comprenant un ensemble de rouleaux d'alignement (151, 161) ou un châssis d'alignement de câble équivalent, prévu pour recevoir lesdits câbles métalliques (140, 141), un dispositif d'application de câble (152, 162) configuré pour appliquer les câbles métalliques (140, 141) entre les bandes de caoutchouc produites par la calandre (110), et une presse d'assemblage (153, 163), dans lequel lesdits rouleaux d'alignement, le dispositif d'application de câble et la pression d'assemblage de câble sont agencés en série le long de la direction d'alimentation (F),
et **en ce que** le dispositif d'application de câble (152, 162) de chaque ensemble de préparation (150, 160) est mobile le long des guides linéaires (154, 164, 190) entre une position de travail à proximité de la calandre (110) et une position de préparation positionnée entre les rouleaux d'alignement (151, 161) et la presse d'assemblage (153, 163) de l'ensemble de préparation (150, 160) respectif.

2. Appareil (100) selon la revendication 1, dans lequel les porte-bobines (120, 130) sont agencés le long de la direction d'alimentation (F) et sont montés sur une plateforme (180) qui est mobile transversalement par rapport à la calandre (110) comme la plateforme (170) sur laquelle les ensembles de préparation (150, 160) sont montés.

3. Appareil (100) selon la revendication 1, dans lequel les porte-bobines (120, 130) sont fixes par rapport à la calandre (110) et agencés de sorte que les directions d'alimentation (F', F") respectives des câbles métalliques (140, 141) sont convergentes par rapport à ladite direction d'alimentation (F).

4. Appareil (100) selon l'une quelconque des revendications 1 à 3, dans lequel les plans des presses d'assemblage de câble (153, 163) des ensembles de préparation (150, 160) comprennent des plaques électromagnétiques (153a, 163a), lesdites plaques électromagnétiques (153a, 163a) étant agencées en aval des presses d'assemblage de câble (153, 163) par rapport à la direction d'alimentation (F).

5. Appareil (100) selon l'une quelconque des revendications 1 à 4, dans lequel les guides linéaires le long desquels chaque dispositif d'application de câble est mobile (152, 162) comprennent une paire de guides de support (154, 164) agencés entre les rouleaux d'alignement (151, 161) et la presse d'assemblage de câble (153, 163) et une paire de guides de raccordement (190) pouvant être sélectivement montée entre la presse d'assemblage de corde (153, 163) et la calandre (110).

6. Dispositif d'application de câble (152, 162) destiné à être utilisé dans un appareil (100) pour recouvrir des câbles métalliques avec du caoutchouc selon l'une quelconque des revendications 1 à 5, ledit dispositif d'application de câble (152, 162) comprenant :
i) un élément coulissant (152a, 162a)
ii) un cylindre de guidage de câble (152b, 162b)
iii) un cylindre de pression de câble (152c, 162c)
ledit cylindre de guidage de câble (152b, 162b) et le cylindre de pression de câble (152c, 162c) étant prévus avec une pluralité de rainures circonférentielles parallèles entre elles, configurées pour recevoir des câbles métalliques (140, 141) respectifs prévus pour être recouverts avec du caoutchouc le long d'une direction d'alimentation (F) et étant montés en rotation l'un après l'autre sur ledit élément coulissant (152a, 162a) dans ladite direction d'alimentation (F),
**caractérisé en ce que** ledit dispositif d'application de câble (152, 162) comprend en outre un élément de blocage (152d, 162d) approprié pour bloquer de manière stable les câbles métalliques (140, 141) sur le cylindre de pression (152c, 162c), ledit élément de blocage étant monté sur l'élément coulissant (152a, 162a) et étant mobile vers et depuis le cylindre de pression (152c, 162c).

7. Procédé pour fabriquer une multicouche comprenant deux couches de caoutchouc externes et une couche intermédiaire de câbles métalliques dans un appareil de revêtement de caoutchouc (100) ayant deux porte-bobines (120, 130), ledit procédé comprenant les étapes suivantes :
i) prévoir un premier et un second ensemble de préparation (150, 160) entre une calandre (110) et les deux porte-bobines (120, 130) dudit appareil de revêtement de caoutchouc (100), lesdits premier et second ensembles de préparation (150, 160) comprenant un ensemble de rouleaux d'alignement (151, 161) ou un châssis d'alignement de câble équivalent, prévu pour recevoir des câbles métalliques (140, 141) à distance de l'un quelconque des porte-bobines (120, 130), un dispositif d'application de câble (152, 162) pour l'application des câbles métalliques (140, 141) entre la bande de caoutchouc produite par la calandre (110) et une presse d'assemblage de câble (153, 163), ledit ensemble de rouleaux d'alignement, le dispositif d'application de câble et la presse d'assemblage de câble étant agencés en série le long d'une direction d'alimentation (F) s'étendant des porte-bobines (120, 130) à la calandre (110) ;
ii) monter lesdits ensembles de préparation (150, 160) sur une plateforme (170) mobile dans une direction transversale (T) perpendiculaire à ladite direction d'alimentation (F) ;
iii) tirer chaque câble métallique (141) alimenté à partir du porte-bobine (130) respectif dans un cylindre de guidage de câble (162b) et dans un cylindre de pression de câble (162c) du dispositif d'application de câble (162) relatif, bloquer et assembler les câbles métalliques (141) provenant du porte-bobine (130) dans la presse d'assemblage de câble (163) relative à proximité des extrémités de tête respectives, dans lequel lesdites opérations sont réalisées dans une préparation hors ligne (160) de l'appareil (100) ;
iv) arrêter la calandre (110), bloquer et épisser les extrémités de queue des câbles métalliques (140) dans la presse d'assemblage de câble (153) de l'ensemble de préparation (150) respectif, lesdites opérations étant réalisées lorsqu'il n'y a plus de câbles métalliques (140) dans le porte-bobine (120) agencé en ligne ;
v) déplacer le dispositif d'application de câble (152) dans l'ensemble de préparation en ligne (150) de manière linéaire le long de la direction d'alimentation (F) à partir de la position de travail à proximité de la calandre (110) jusqu'à une position de préparation entre sa presse d'assemblage de câble (153) et ses rouleaux d'alignement (151) ;
vi) déplacer la plateforme mobile (170) qui supporte les premier et second ensembles de préparation (150, 160) transversalement par rapport à la direction d'alimentation afin d'aligner l'ensemble de préparation hors ligne (160) dans la direction d'alimentation (F) ;
vii) assembler les extrémités de tête des câbles métalliques (141) fournies par le porte-bobine (130) associé avec l'ensemble de préparation maintenant en ligne (160) avec les extrémités de queue des câbles métalliques (140) qui restent du porte-bobine (120) associé à l'ensemble de préparation préalablement en ligne (150) au moyen de la presse d'assemblage de câble (163) de l'ensemble de préparation (160) maintenant en ligne ;
viii) actionner les moteurs de la calandre (110) et tracter le dispositif d'application de câble (162) de l'ensemble de préparation maintenant en ligne conjointement avec les câbles métalliques (140, 141) épissés, en le faisant déplacer de manière linéaire le long de la direction d'alimentation (F) jusqu'à la calandre (110) ;
ix) raccorder le dispositif d'application de câble (162) de l'ensemble de préparation (160) maintenant en ligne à la calandre (110) et commencer un nouveau cycle de fabrication.

8. Procédé selon la revendication 7, dans lequel les jonctions entre la tête et les extrémités de queue des câbles métalliques (140, 141) sont réalisées en appliquant et en comprimant des bandes de caoutchouc sur ces dernières.

9. Procédé selon la revendication 7 ou 8, dans lequel l'étape v) pour déplacer le dispositif d'application de câble (152) dans l'ensemble de préparation en ligne (150) est réalisée en montant des guides de raccordement linéaires (190) entre la presse d'assemblage de câble (153) et la calandre (110).
